# FASCICULE DE BREVET EUROPEEN

(11) **EP 4 399 112 B1**
(45) Date de publication et mention de la délivrance du brevet: **19.11.2025**
(21) Numéro de dépôt: 22772968.8
(22) Date de dépôt: 05.09.2022
(51) Int. Cl.: B60K 15/03

(54) **ARMATURE POUR RÉSERVOIR DE VÉHICULE AUTOMOBILE**
VERSTÄRKUNG FÜR EINEN KRAFTFAHRZEUGTANK
REINFORCEMENT FOR A MOTOR VEHICLE TANK

(30) Priorité: 06.09.2021 LU 500623
(43) Date de publication de la demande: 17.07.2024
(73) Titulaire: OPmobility C-Power Belgium Research, 1200 Woluwe-Saint-Lambert (BE)
(72) Inventeur: DUEZ, Laurent, 1130 Bruxelles (BE); CHAUSSINAND, Antoine, 1130 Bruxelles (BE); REVEILLARD, Damien, 1130 Bruxelles (BE)
(74) Mandataire: LLR
(86) Numéro de dépôt international: PCT/EP2022/074578
(87) Numéro de publication internationale: WO 2023/031451

(56) Documents cités:
- US-A1- 2016 200 192
- US-A1- 2019 092 159

## Description

### 1. Domaine de l'invention

L'invention concerne le domaine technique des réservoirs en matière plastique pour véhicule automobile, plus particulièrement les réservoirs à carburant liquide. L'invention concerne de façon générale une armature pour réservoir en matière plastique pour véhicule automobile comprenant au moins un moyen destiné à la fixation d'un élément de renfort interne du réservoir.

Plus particulièrement, l'invention concerne une armature pour réservoir en matière plastique pour véhicule automobile comprenant au moins un moyen destiné à la fixation d'un élément de renfort interne pour réservoir en matière plastique pour véhicule automobile.

L'invention concerne également un assemblage configuré pour être fixé à l'intérieur d'un réservoir en matière plastique pour véhicule automobile comprenant ladite armature et au moins un élément de renfort interne, ainsi qu'également le réservoir en matière plastique pour véhicule automobile comprenant ledit assemblage. L'invention concerne aussi un procédé de fabrication d'un réservoir en matière plastique pour véhicule automobile.

### 2. Solutions de l'art antérieur

Les réservoirs à carburant en matière plastique obtenus par extrusion-soufflage d'une paraison subissent des variations dimensionnelles au cours de leur vie, soit tout d'abord dès leur sortie de moule, du fait de leur refroidissement qui s'accompagne d'un retrait de la matière, soit pendant leur utilisation, en raison notamment de surpression ou de dépression de leur contenu, soit du fait de leur dilatation thermique en cours de vie, soit encore du fait de leur vieillissement.

Il est connu d'insérer des éléments de renfort interne au sein du réservoir lors de la fabrication de ce dernier. Ces éléments de renfort interne ont pour but d'augmenter la résistance du réservoir en matière plastique aux contraintes mécaniques auxquelles ces derniers sont soumis au cours de leur vie.

Ainsi le document US 2011/0226777 A1 divulgue un assemblage comprenant une armature et des éléments de connexion aux parois du réservoir, lesdits éléments de connexion présentant une faible rigidité qui ne leur permet pas d'assurer une fonction de renfort interne, ladite armature comprenant également des structures déformables selon la direction longitudinale X du véhicule auquel l'armature est destiné et la direction transversale Y de ce véhicule mais également la direction verticale Z dudit véhicule. Cependant un tel assemblage a une capacité assez limitée à s'adapter aux variations dimensionnelles du réservoir. En outre, un tel assemblage présente une résistance à la compression et à l'étirement dans la direction verticale du véhicule trop faible.

On connaît aussi du document US2016/0200192 une structure de fixation d'un baffle anti-bruit dans un réservoir de carburant. Le baffle peut comprendre une partie d'engagement avec une colonne de renfort reliant les surfaces supérieure et inférieure du réservoir. La partie d'engagement comprend deux bras terminés chacun par une portion recourbée. La colonne est insérée dans la partie d'engagement à travers un interstice entre les deux portions recourbées, ce qui ouvre les bras, qui se referment sur la colonne du fait de leur élasticité. Comme la colonne est connectée aux surfaces supérieure et inférieure du réservoir, la partie d'engagement peut être fixée de façon stable.

On connaît également du document US20219/0092159 un pilier de renfort pour réservoir de carburant, comprenant un corps principal et un support monté sur le corps principal et permettant de fixer un composant du réservoir. Le support est monté sur le corps principal par l'intermédiaire d'une partie engagée du support, prévue pour être engagée avec une partie d'engagement du corps principal, formée sur une partie circonférentielle externe du corps principal. La partie engagée comprend deux portions séparées, qui se referment sur le corps principal grâce à deux griffes présentes sur l'une des portions, qui sont insérées chacune dans un trou traversant de l'autre portion. Une telle structure, mettant en jeu différentes pièces pour monter le support sur le corps principal est assez complexe.

### 3. Objectifs de l'invention

L'invention a notamment pour objectif de pallier ces inconvénients de l'art antérieur.

A cet effet, l'invention a pour objectif de fournir un assemblage comprenant une armature pour un réservoir en matière plastique pour un véhicule automobile, l'assemblage comprenant également au moins un élément de renfort interne, ledit assemblage présentant une capacité accrue à s'adapter aux variations dimensionnelles du réservoir, plus particulièrement lors de la fabrication dudit réservoir et présentant une résistance à la compression et à l'étirement améliorée.

Plus précisément, un objectif de l'invention, dans au moins un de ses modes de réalisation, est de fournir une armature comprenant un moyen de fixation configuré pour fixer au moins un élément de renfort interne, l'armature et l'au moins un élément de renfort interne étant aptes à former un assemblage présentant une capacité accrue à s'adapter aux variations dimensionnelles d'un réservoir en matière plastique pour un véhicule automobile, plus particulièrement lors de la fabrication dudit réservoir.

L'invention, dans au moins un de ses modes de réalisation, a encore pour objectif de fournir un réservoir en matière plastique pour véhicule automobile.

Un autre objectif de l'invention, dans au moins un de ses modes de réalisation, est de mettre en œuvre un procédé de fabrication d'un réservoir en matière plastique pour véhicule automobile.

### 4. Exposé de l'invention

L'invention concerne ainsi une armature pour réservoir en matière plastique pour véhicule automobile selon la revendication 1 comprenant au moins un moyen destiné à la fixation d'un élément de renfort interne du réservoir.

Selon l'invention, l'au moins un moyen destiné à la fixation de l'élément de renfort interne comprend au moins une première structure configurée pour encliqueter au moins une partie de l'élément de renfort interne, ladite au moins une première structure comprenant au moins deux corps mobiles l'un par rapport à l'autre, chaque corps mobile étant muni d'un moyen de retenue configuré pour retenir l'élément de renfort interne dans le sens opposé au sens d'encliquetage, et est caractérisée par au moins un élément formant butée faisant saillie dans le sens opposé au sens d'encliquetage afin de fournir une butée pour l'élément de renfort interne lorsque celui-ci est encliqueté.

Le principe général de l'invention repose sur la présence d'un moyen destiné à la fixation de l'élément de renfort interne permettant simultanément d'encliqueter au moins une partie de l'élément de renfort interne et de maintenir l'élément de renfort en position après encliquetage afin d'assurer une fixation présentant une résistance accrue aux contraintes mécaniques subies par l'assemblage obtenu lors de la fabrication du réservoir et une capacité accrue à s'adapter aux variations dimensionnelles du réservoir. La au moins une première structure comprenant au moins deux corps mobiles l'un par rapport à l'autre, chaque corps mobile étant muni d'un moyen de retenue configuré pour retenir l'élément de renfort interne dans le sens opposé au sens d'encliquetage, permet d'encliqueter au moins une partie de l'élément de renfort interne et la présence d'au moins un élément formant butée faisant saillie dans le sens opposé au sens d'encliquetage fournit une butée pour l'élément de renfort interne lorsque celui-ci est encliqueté. On comprend que cet élément formant butée est un élément distinct des corps mobiles, c'est-à-dire en particulier que le moyen de retenue configuré pour retenir l'élément de renfort interne dans le sens opposé au sens d'encliquetage n'est pas confondu avec l'élément formant butée.

De façon avantageuse, l'élément formant butée permet de maintenir l'élément de renfort après encliquetage. La au moins une partie de l'élément de renfort interne est après encliquetage maintenue en position et prise en étau par la combinaison de la retenue assurée par les moyens de retenue configurés pour retenir l'élément de renfort interne dans le sens opposé au sens d'encliquetage présents sur les corps mobiles et l'au moins un élément formant butée. En outre, après encliquetage, la au moins une partie de l'élément de renfort interne est également maintenue en position par la force exercée sur elle par les au moins deux corps mobiles.

Ainsi, l'invention repose sur une approche tout à fait nouvelle et inventive d'un moyen de fixation permettant une augmentation de la capacité d'un assemblage comprenant une armature et au moins un élément de renfort interne à s'adapter aux variations dimensionnelles du réservoir et permet une diminution des contraintes engendrées par la présence dudit assemblage au sein du réservoir. Une telle disposition limite ainsi les déplacements relatifs entre les deux pièces dans les deux axes parallèles par rapport notamment à la surface de soudure. Une telle interconnexion créée entre l'élément de renfort interne et l'armature permet d'assurer un centrage des deux pièces et une fixation améliorée.

**Par l'expression,** « élément de renfort interne », on entend désigner un élément de structure destiné à relier deux parois opposées du réservoir. L'élément de renfort interne permet de limiter la déformation du réservoir lors de sa mise en pression. L'élément de renfort interne est de préférence soudé à ses deux extrémités au réservoir en matière plastique.

Par le terme « réservoir », on entend désigner un réservoir étanche, apte à stocker du carburant liquide dans des conditions d'utilisation et d'environnement diverses et variées. Le réservoir selon l'invention est réalisé avec une paroi en matière plastique, comprenant généralement une face intérieure sur sa partie concave et une face extérieure sur sa partie convexe. Préférentiellement, le réservoir est un réservoir en matière plastique à carburant liquide.

Par l'expression « une première structure configurée pour encliqueter au moins une partie de l'élément de renfort inteme », on entend désigner le fait qu'au moins une partie de l'élément de renfort, de préférence l'entièreté de l'élément de renfort, est bloquée par le moyen de fixation et empêchée de se mouvoir après encliquetage par sa prise en étau entre les moyens de retenue présents sur les corps mobiles et l'au moins un élément formant butée.

De façon avantageuse, l'au moins un élément formant butée présente deux surfaces, à savoir une première surface destinée à former une surface de butée axiale pour l'élément de renfort interne dans le sens d'encliquetage, et une deuxième surface destinée à former une surface de butée radiale pour l'élément de renfort interne dans un sens de rotation de l'élément de renfort interne autour d'un axe parallèle à l'axe de la butée axiale.

Avantageusement, l'au moins un élément formant butée est configuré pour pénétrer dans un organe de réception de l'élément de renfort interne de manière qu'après encliquetage, l'élément de renfort interne est bloqué en rotation. On comprend que cet organe de réception peut être composé notamment d'une forme de réception spécifique ménagée dans l'élément de renfort interne.

Avantageusement, l'armature pour réservoir en matière plastique pour véhicule automobile selon l'invention est telle que la au moins une première structure est configurée pour encliqueter au moins une partie interne de l'élément de renfort interne.

Ainsi, une première structure configurée pour encliqueter au moins une partie interne de l'élément de renfort interne permet une fixation améliorée de l'élément de renfort interne, les corps mobiles permettant d'assurer une limitation des mouvements de l'élément de renfort interne dans toutes les directions. En effet, la force exercée sur la partie interne de l'élément de renfort interne par les corps mobiles peut l'être dans un plus grand nombre de direction.

Par l'expression « une partie interne de l'élément de renfort interne », on entend désigner une partie évidée de matière de l'élément de renfort interne telle que par exemple un trou traversant ou un trou borgne.

Selon un mode de réalisation préférentiel, l'armature pour réservoir en matière plastique pour véhicule automobile selon l'invention est telle que la première structure est configurée pour encliqueter au moins une partie externe de l'élément de renfort interne.

Ainsi, une première structure configurée pour encliqueter au moins une partie externe de l'élément de renfort interne permet une fixation de l'élément de renfort interne moins forte dans la direction de soudage de l'élément de renfort interne tout en assurant une fixation de l'élément de renfort interne accrue dans les autres directions, les corps mobiles venant en reprise des parties extérieures de l'élément de renfort interne non localisées aux endroits de soudure.

Par l'expression « les corps mobiles venant en reprise des parties extérieures de l'élément de renfort interne non localisées aux endroits de soudure », on entend désigner le fait que les corps mobiles sont mis en contact avec des parties extérieures de l'élément de renfort interne non localisées aux endroits de soudure et y exercent une pression.

Selon un mode de réalisation préférentiel, l'armature pour réservoir en matière plastique pour véhicule automobile selon l'invention est telle que les au moins deux corps mobiles l'un par rapport à l'autre sont des languettes.

Ainsi, des corps mobiles l'un par rapport à l'autre ayant une forme de languette permettent d'obtenir un bon compromis entre rigidité et souplesse des corps mobiles.

Selon un mode de réalisation préférentiel, l'armature pour réservoir en matière plastique pour véhicule automobile selon l'invention est telle que le moyen de retenue configuré pour retenir de l'élément de renfort interne se présente sous la forme d'un évidement ou d'un saillant.

Ainsi, un moyen de retenue configuré pour retenir l'élément de renfort interne se présentant sous la forme d'un évidement ou d'un saillant permet de disposer de corps mobiles de réalisation plus aisée.

Selon un mode de réalisation préférentiel, l'armature pour réservoir en matière plastique pour véhicule automobile selon l'invention est telle que l'au moins un élément formant butée comprend une tige, préférentiellement une tige nervurée. La tige présente avantageusement une forme de X, U, V ou W.

Ainsi, un élément formant butée comprenant une tige permet un réglage plus simple du positionnement de la butée. On entend par « tige », une pièce allongée selon un axe principal, faisant saillie dans cet axe à partir d'une surface de la première structure.

Selon un mode de réalisation préférentiel, l'armature pour réservoir en matière plastique pour véhicule automobile selon l'invention est à base d'un matériau sélectionné parmi le groupe de matériaux consistant en du polyéthylène haute densité (HDPE), du polyoxyméthylène (POM), du polyamide (PA), du polyphthalamide (PPA), du polycétone (PK). Préférentiellement, l'armature se présente sous la forme d'une pièce monobloc.

Selon un mode de réalisation préférentiel, l'armature pour réservoir en matière plastique pour véhicule automobile selon l'invention est telle qu'elle comprend des moyens de support de composants du réservoir à carburant tels qu'une ligne de ventilation ou de liquide, qu'une vanne telle qu'un clapet, une vanne de type Roll Over Valve (ROV) ou une vanne de type Fill Limit Vent Valve (FLVV), qu'un capteur de température, un capteur de niveau ou un capteur de qualité. L'armature peut également comprendre ou servir de support à un déflecteur appelé également baffle anti-bruit ou baffle anti-slosh. Préférentiellement, les composants du réservoir à carburant et/ou le déflecteur sont/est fixé(s) sur l'armature par « clipage ». Ainsi un « clipage » permet une manutention et une fixation facile des composants du réservoir à carburant et/ou du déflecteur sur l'armature.

Selon un mode de réalisation préféré, l'armature pour réservoir en matière plastique pour véhicule automobile selon l'invention est telle qu'elle comprend un lien déformable reliant l'armature et l'au moins un moyen destiné à la fixation de l'élément de renfort interne, ledit lien étant configuré pour se déformer afin d'autoriser un déplacement relatif de l'armature et du au moins un moyen destiné à la fixation de l'élément de renfort interne l'un par rapport à l'autre sous l'effet d'une sollicitation mécanique externe à l'armature.

Ainsi, un lien déformable permet de diminuer les contraintes sur l'armature, lesdites contraintes étant liées aux variations de température et de pression dans le réservoir générant des déformations par déplacement du ou des éléments de renfort internes les uns par rapport aux autres. Ces déplacements génèrent des contraintes sur l'armature si aucun lien déformable n'est présent sur l'armature et donc entre celle-ci et le ou les éléments de renfort interne. Préférentiellement, le lien déformable permet des déformations dans les axes parallèles à la surface de soudure de l'élément de renfort interne sur le réservoir.

Selon une variante préférée, l'armature pour réservoir en matière plastique pour véhicule automobile est telle qu'elle comprend un organe de réception configuré pour recevoir un moyen d'insertion tel qu'une canne d'insertion par exemple utilisée lors de la fabrication du réservoir afin d'insérer un assemblage comprenant l'armature au sein d'une paraison. Ledit organe de de réception se présente avantageusement sous la forme d'un trou ou d'un trou borgne.

Selon une variante préférée, l'armature pour réservoir en matière plastique pour véhicule automobile est telle qu'elle comprend une pluralité de trous traversants. Préférentiellement, l'armature est également munie de moyens de rigidification tels que des nervures.

Ainsi, la présence de trous traversants dans l'armature permet un mouvement plus aisé du liquide contenu dans le réservoir. La présence de moyens de rigidification sur l'armature permet à cette dernière de mieux résister aux contraintes liées à la fixation d'un composant sur l'armature et aux contraintes subies par cette dernière au sein d'un réservoir à carburant.

Un autre objet de l'invention est de fournir un assemblage pour réservoir en matière plastique pour véhicule automobile selon la revendication 13 comprenant une armature pour réservoir en matière plastique pour véhicule automobile selon l'invention et un élément de renfort interne configuré pour être encliqueté sur l'armature. Préférentiellement, l'élément de renfort interne se présente soit sous la forme d'un pilier sous forme d'une colonne, préférentiellement cylindrique, ou sous la forme d'un diabolo, soit sous la forme d'un organe de rétention. Préférentiellement, l'organe de rétention comprend une paroi pourvue d'un évidement central, une partie de la paroi comprenant des nervures de renfort. La paroi de l'organe de rétention peut être plane ou incurvée. Ledit élément de renfort comprend préférentiellement sur ces deux terminaisons deux parties surmoulées en une matière apte à être soudée aux parois du réservoir. L'élément de renfort interne est préférentiellement constitué d'une partie centrale à base de polyoxyméthylène (POM), du polyphthalamide (PPA), du polycétone (PK), du polyamide (PA), du métal et de deux parties surmoulée en polyéthylène haute densité (HDPE). L'élément de renfort interne comprend préférentiellement une zone de faiblesse mécanique apte à entrainer la cassure dudit élément lorsque ce dernier est soumis à de fortes contraintes émanant des efforts exercés sur le réservoir. Cette zone de faiblesse mécanique se présente sous la forme d'une section plus faible, d'au moins une encoche ou d'une épaisseur plus faible de la paroi. L'élément de renfort interne peut comprendre une partie creuse, plus particulièrement dans la partie centrale de l'élément de renfort.

Un autre objet de l'invention est de fournir un réservoir en matière plastique pour véhicule automobile selon la revendication 16 comprenant un assemblage pour réservoir en matière plastique pour véhicule automobile selon l'invention.

Un objet de l'invention est également de fournir un procédé de fabrication d'un réservoir en matière plastique pour véhicule automobile selon la revendication 17.

Selon une mise en œuvre avantageuse du procédé de fabrication d'un réservoir en matière plastique pour véhicule automobile selon l'invention, ledit procédé comprend une étape de fixation, plus précisément d'encliquetage, d'un élément de renfort interne à une armature pour réservoir en matière plastique pour véhicule automobile selon l'invention.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un assemblage pour réservoir en matière plastique pour véhicule automobile selon l'invention,
- la figure 2 illustre un moyen destiné à la fixation d'un élément de renfort interne d'une armature selon l'invention,
- la figure 3 illustre la connexion entre un élément de renfort interne et une armature selon l'invention.

### 6. Description d'au moins un mode de réalisation de l'invention

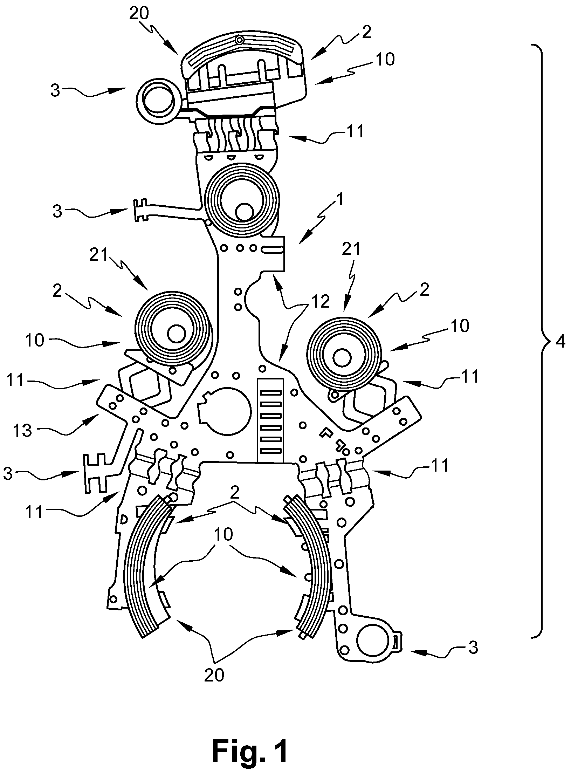

On présente, en relation avec la figure 1, un mode de réalisation d'un assemblage 4 pour réservoir en matière plastique pour véhicule automobile selon l'invention comprenant une armature 1 et des éléments de renfort interne 2. L'élément de renfort interne 2 est destiné à relier deux parois opposées du réservoir. L'armature 1 pour réservoir en matière plastique pour véhicule automobile comprend au moins un moyen 10 destiné à la fixation d'un élément de renfort interne 2 au réservoir. L'armature 1 comprend un lien déformable 11 reliant l'armature 1 et le moyen 10 destiné à la fixation de l'élément de renfort interne 2, ledit lien 10 étant apte à se déformer pour autoriser un déplacement relatif de l'armature 1 et du moyen 10 destiné à la fixation de l'élément de renfort interne 2 l'un par rapport à l'autre sous l'effet d'une sollicitation mécanique externe à l'armature 1. L'armature 1 comporte également un organe de réception 12 configuré pour recevoir un moyen d'insertion tel qu'une canne d'insertion par exemple pour l'insertion de l'assemblage 4 au sein d'une paraison lors de la fabrication du réservoir. Ledit organe de réception 12 se présente avantageusement sous la forme d'un trou ou d'un trou borgne. L'armature 1 est à base d'un matériau sélectionné parmi le groupe de matériaux consistant en du polyéthylène haute densité (HDPE), du polyoxyméthylène (POM), du polyamide (PA), du polyphthalamide (PPA), du polycétone (PK). L'armature 1 comprend également des moyens de support 3 pour des composants du réservoir à carburant tels qu'une pompe, un capteur de niveau, un capteur de pression, un capteur de température et une vanne telle qu'un clapet, une vanne de type Roll Over Valve (ROV) ou une vanne de type Fill Limit Vent Valve (FLVV) ou des lignes de ventilation et de carburant. L'armature 1 comprend également une pluralité de trous traversant 13. Préférentiellement, l'armature 1 est également munie de moyens de rigidification tels que des nervures non représentées. Les éléments de renfort interne 2 se présentent sous la forme d'un pilier 21 sous forme d'une colonne, préférentiellement cylindrique, ou sous la forme d'un diabolo. Les éléments de renfort interne 2 peuvent également se présenter sous la forme d'un organe de rétention 20 comprenant une paroi pourvue d'un évidement central, une partie de la paroi comprenant des nervures de renfort. La paroi de l'organe de rétention peut être plane ou incurvée. Lesdits élément de renfort 2 comprennent préférentiellement sur leurs deux terminaisons deux parties surmoulées en une matière apte à être soudée aux parois du réservoir. Les éléments de renfort interne 2 sont préférentiellement constitués d'une partie centrale à base de polyoxyméthylène (POM), du polyphthalamide (PPA), du polycétone (PK), du polyamide (PA), du métal et de deux parties surmoulée en polyéthylène haute densité (HDPE). Les éléments de renfort interne comprennent préférentiellement une zone de faiblesse mécanique apte à entrainer la cassure desdits éléments lorsque ces derniers sont soumis à de fortes contraintes émanant des efforts exercés sur le réservoir.

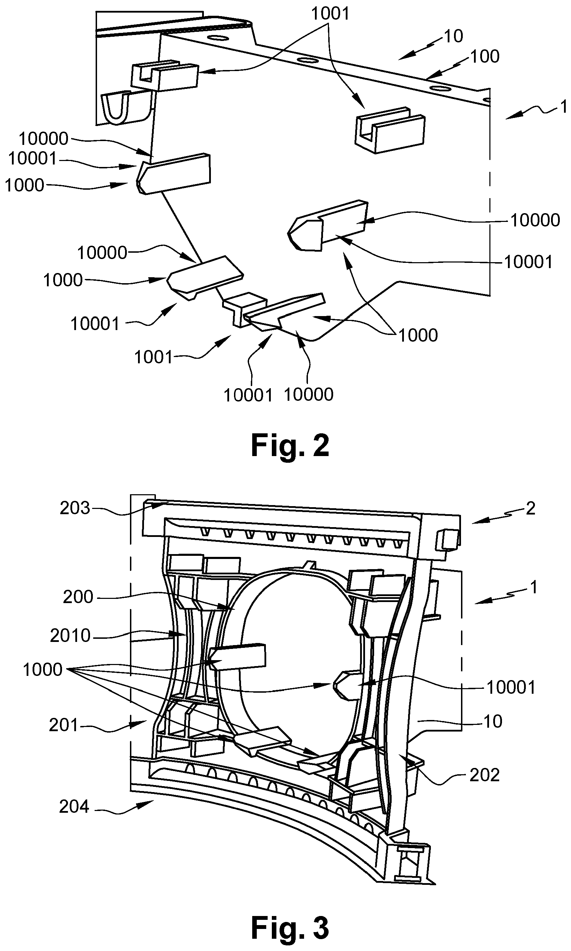

La figure 2 présente un moyen 10 destiné à la fixation d'un élément de renfort interne du réservoir sur une armature 1. Ledit moyen 10 comprend au moins une première structure 100 configurée pour encliqueter au moins une partie de l'élément de renfort interne, ladite au moins une première structure comprenant au moins deux corps mobiles l'un par rapport à l'autre 1000 en forme de languettes 10000, chaque corps mobile 1000 étant muni d'un moyen de retenue 10001 configuré pour retenir l'élément de renfort interne 2 dans le sens opposé au sens d'encliquetage, ledit moyen de retenue 10001 se présentant sous la forme d'un saillant, et au moins un élément formant butée 1001 comprenant une tige en forme de U. L'élément formant butée 1001 fait saillie dans le sens opposé au sens d'encliquetage afin de fournir une butée pour l'élément de renfort interne 2 lorsque celui-ci est encliqueté. La première structure 100 est configurée pour encliqueter au moins une partie interne de l'élément de renfort interne 2. L'élément formant butée 1001 combiné aux moyens de retenue 10001 forment un étau de manière qu'après encliquetage, la au moins une partie de l'élément de renfort interne 2 est maintenue en position et prise en étau par la combinaison de la retenue assurée par les moyens de retenue 10001 et l'au moins un élément formant butée 1001. L'élément formant butée 1001 présente au moins deux surfaces de butée, à savoir une première surface destinée à former une surface de butée axiale pour l'élément de renfort interne 2 dans le sens d'encliquetage, et une deuxième surface destinée à former une surface de butée radiale pour l'élément de renfort interne 2 dans un sens de rotation de l'élément de renfort interne 2 autour d'un axe parallèle à l'axe de la butée axiale. Plus précisément dans l'exemple de la figure 2, la surface de butée axiale correspond à la face avant, en forme de U de l'élément 1001, s'étendant sensiblement parallèlement à la face arrière de la première structure 100, et la surface de butée radiale correspond à l'une ou plusieurs des surfaces de l'élément 1001 s'étendant sensiblement perpendiculairement à la face arrière de la première structure 100.

La figure 3 illustre la connexion entre un élément de renfort interne 2 et une armature 1 selon l'invention formant une partie d'un assemblage pour réservoir en matière plastique pour véhicule automobile selon l'invention. La connexion est effectuée à l'aide d'un moyen 10 comprenant au moins une première structure 100 configurée pour encliqueter au moins une partie de l'élément de renfort interne 2, ladite au moins une première structure 100 comprenant quatre corps mobiles l'un par rapport à l'autre 1000 en forme de languettes, chaque corps mobile 1000 étant muni d'un moyen de retenue 10001 configuré pour retenir l'élément de renfort interne 2 dans le sens opposé au sens d'encliquetage, ledit moyen de retenue 10001 se présentant sous la forme d'un saillant, et au moins un élément formant butée. La première structure 100 est configurée pour encliqueter au moins une partie interne 200 de l'élément de renfort interne 2. L'élément de renfort interne 2 se présente sous la forme d'un organe de rétention 20 comprenant une paroi 201 pourvue d'un évidement central 200, une partie de la paroi 201 comprenant des nervures de renfort 2010. La paroi de l'organe de rétention est incurvée. Ledit élément de renfort comprend préférentiellement sur ces deux terminaisons deux parties surmoulées en une matière apte à être soudée aux parois du réservoir. L'élément de renfort interne est préférentiellement constitué d'une partie centrale 202 à base de polyoxyméthylène (POM), du polyphthalamide (PPA), du polycétone (PK), du polyamide (PA), du métal et de deux parties surmoulée en polyéthylène haute densité (HDPE) 203, 204. L'élément de renfort interne comprend préférentiellement une zone de faiblesse mécanique apte à entrainer la cassure dudit élément lorsque ce dernier est soumis à de fortes contraintes émanant des efforts exercés sur le réservoir.

## Revendications

1. Armature (1) pour réservoir en matière plastique pour véhicule automobile comprenant au moins un moyen (10) destiné à la fixation d'un élément de renfort interne (2) du réservoir destiné à relier deux parois opposées du réservoir, **caractérisé en ce que** l'au moins un moyen (10) destiné à la fixation de l'élément de renfort interne (2) comprend au moins une première structure (100) configurée pour encliqueter au moins une partie de l'élément de renfort interne (2), ladite au moins une première structure (100) comprenant :
- au moins deux corps mobiles l'un par rapport à l'autre (1000), chaque corps mobile (1000) étant muni d'un moyen de retenue (10001) configuré pour retenir l'élément de renfort interne (2) dans le sens opposé au sens d'encliquetage et **caractérisé en ce que** la première structure (100) comprend
- au moins un élément formant butée (1001), distinct des corps mobiles (1000), faisant saillie dans le sens opposé au sens d'encliquetage afin de fournir une butée pour l'élément de renfort interne (2) lorsque celui-ci est encliqueté.

2. Armature (1) pour réservoir en matière plastique pour véhicule automobile selon la revendication 1, telle que l'au moins un élément formant butée (1001) combiné aux moyens de retenue (10001) forment un étau de manière qu'après encliquetage, la au moins une partie de l'élément de renfort interne (2) est maintenue en position et prise en étau par la combinaison de la retenue assurée par les moyens de retenue (10001) et l'au moins un élément formant butée (1001).

3. Armature (1) pour réservoir en matière plastique pour véhicule automobile selon l'une quelconque des revendications 1 ou 2, telle que ladite au moins une première structure (100) est configurée pour encliqueter au moins une partie interne de l'élément de renfort interne (2).

4. Armature (1) pour réservoir en matière plastique pour véhicule automobile selon l'une quelconque des revendications précédentes, telle que ladite au moins une première structure (100) est configurée pour encliqueter au moins une partie externe de l'élément de renfort interne (2).

5. Armature (1) pour réservoir en matière plastique pour véhicule automobile selon l'une quelconque des revendications précédentes, telle que les au moins deux corps mobiles l'un par rapport à l'autre (1000) sont des languettes (10000).

6. Armature (1) pour réservoir en matière plastique pour véhicule automobile selon l'une quelconque des revendications précédentes, telle que le moyen de retenue (10001) configuré pour retenir l'élément de renfort interne (2) se présente sous la forme d'un évidement ou d'un saillant.

7. Armature (1) pour réservoir en matière plastique pour véhicule automobile selon l'une quelconque des revendications précédentes, telle que l'au moins un élément formant butée (1001) comprend une tige.

8. Armature (1) pour réservoir en matière plastique pour véhicule automobile selon l'une quelconque des revendications précédentes, telle qu'elle comprend des moyens de support (3) de composants du réservoir à carburant tels qu'une ligne de ventilation ou de liquide, qu'une vanne, qu'un capteur de température, un capteur de niveau, un capteur de pression ou un capteur de qualité.

9. Armature (1) pour réservoir en matière plastique pour véhicule automobile selon l'une quelconque des revendications précédentes, telle qu'elle comprend au moins un composant choisi parmi un baffle anti-bruit ou baffle anti-slosh, une vanne, une ligne de ventilation ou de liquide, un capteur de température, un capteur de niveau, un capteur de pression ou un capteur de qualité.

10. Armature (1) pour réservoir en matière plastique pour véhicule automobile selon l'une quelconque des revendications précédentes, telle qu'elle comprend un lien déformable (11) reliant l'armature (1) et l'au moins un moyen (10) destiné à la fixation de l'élément de renfort interne (2), ledit lien (11) étant configuré pour se déformer afin d'autoriser un déplacement relatif de l'armature (1) et du au moins un moyen (10) destiné à la fixation de l'élément de renfort interne (2) l'un par rapport à l'autre sous l'effet d'une sollicitation mécanique externe à l'armature (1).

11. Armature (1) pour réservoir en matière plastique pour véhicule automobile selon l'une quelconque des revendications précédentes, telle qu'elle comprend un organe de réception (12) configuré pour recevoir un moyen d'insertion tel qu'une canne d'insertion par exemple.

12. Armature (1) pour réservoir en matière plastique pour véhicule automobile selon l'une quelconque des revendications précédentes, telle qu'elle comprend une pluralité de trous traversants (13).

13. Assemblage (4) pour réservoir en matière plastique pour véhicule automobile comprenant une armature (1) pour réservoir de véhicule automobile selon l'une quelconque des revendications 1 à 12 et un élément de renfort interne (2) configuré pour être encliqueté sur l'armature (1).

14. Assemblage (4) pour réservoir en matière plastique pour véhicule automobile selon la revendication 13, tel que l'élément de renfort est sélectionné parmi un pilier (21) et un organe de rétention (20).

15. Assemblage (4) pour réservoir en matière plastique pour véhicule automobile selon la revendication 14, tel que l'organe de rétention (20) comprend une paroi (201) pourvue d'un évidement central (200), une partie de la paroi (201) comprenant des nervures de renfort 2010).

16. Réservoir en matière plastique pour véhicule automobile comprenant un assemblage (5) pour réservoir en matière plastique pour véhicule automobile selon l'une quelconque des revendications 13 à 15.

17. Procédé de fabrication d'un réservoir en matière plastique pour véhicule automobile comprenant une étape d'encliquetage d'un élément de renfort interne (2) à une armature (1) pour réservoir en matière plastique pour véhicule automobile selon l'une quelconque des revendications 1 à 12.

## Patentansprüche

1. Verstärkung (1) für einen Kunststofftank für Kraftfahrzeuge, die mindestens ein Mittel (10) zur Befestigung eines inneren Verstärkungselements (2) des Tanks aufweist, das dazu bestimmt ist, zwei gegenüberliegende Wände des Tanks miteinander zu verbinden,
**dadurch gekennzeichnet, dass** das mindestens eine Mittel (10) zur Befestigung des inneren Verstärkungselements (2) mindestens eine erste Struktur (100) aufweist, die zum Einrasten mindestens eines Teils des inneren Verstärkungselements (2) konfiguriert ist, wobei die mindestens eine erste Struktur (100) aufweist:
- mindestens zwei relativ zueinander bewegliche Körper (1000), wobei jeder bewegliche Körper (1000) mit Haltemitteln (10001) versehen ist, die so konfiguriert sind, dass sie das innere Verstärkungselement (2) in der Richtung entgegengesetzt zur Richtung des Einrastens halten, und
**dadurch gekennzeichnet, dass** die erste Struktur (100) aufweist
- mindestens ein Anschlagelement (1001), das von den beweglichen Körpern (1000) getrennt ist und in die Richtung entgegengesetzt zur Einrastrichtung vorsteht, um einen Anschlag für das innere Verstärkungselement (2) bereitzustellen, wenn dieses eingerastet ist.

2. Verstärkung (1) für einen Kunststofftank für Kraftfahrzeuge nach Anspruch 1, wobei das mindestens eine Anschlagelement (1001) in Kombination mit den Haltemitteln (10001) eine Klemme bildet, so dass nach dem Einrasten der mindestens eine Teil des inneren Verstärkungselements (2) durch die Kombination aus dem Halt, der durch die Haltemittel (10001) und das mindestens eine Anschlagelement (1001) bereitgestellt wird, in Position gehalten und in die Klemme eingeklemmt wird.

3. Verstärkung (1) für einen Kunststofftank für Kraftfahrzeuge nach einem der Ansprüche 1 oder 2, wobei die mindestens eine erste Struktur (100) so ausgebildet ist, dass sie mindestens einen inneren Teil des inneren Verstärkungselements (2) einrastet.

4. Verstärkung (1) für einen Kunststofftank für Kraftfahrzeuge nach einem der vorhergehenden Ansprüche, wobei die mindestens eine erste Struktur (100) so ausgebildet ist, dass sie mindestens einen äußeren Teil des inneren Verstärkungselements (2) einrastet.

5. Verstärkung (1) für einen Kunststofftank für Kraftfahrzeuge nach einem der vorhergehenden Ansprüche, derart, dass die mindestens zwei relativ zueinander beweglichen Körper (1000) Laschen (10000) sind.

6. Verstärkung (1) für einen Kunststofftank für Kraftfahrzeuge nach einem der vorhergehenden Ansprüche, derart, dass das Haltemittel (10001), das zum Halten des inneren Verstärkungselements (2) ausgebildet ist, in Form einer Aussparung oder eines Vorsprungs vorliegt.

7. Verstärkung (1) für einen Kunststofftank für Kraftfahrzeuge nach einem der vorhergehenden Ansprüche, derart, dass das mindestens eine Anschlagelement (1001) einen Schaft aufweist.

8. Verstärkung (1) für einen Kunststofftank für Kraftfahrzeuge nach einem der vorhergehenden Ansprüche, derart, dass sie Mittel zum Tragen (3) von Komponenten des Kraftstofftanks aufweist, wie beispielsweise einer Belüftungs- oder Flüssigkeitsleitung, eines Ventils, eines Temperatursensors, eines Füllstandsensors, eines Drucksensors oder eines Qualitätssensors.

9. Verstärkung (1) für einen Kunststofftank für Kraftfahrzeuge nach einem der vorhergehenden Ansprüche, derart, dass sie mindestens eine Komponente aufweist, die aus der Gruppe ausgewählt ist, die aus einer Schallschutzwand oder einer Schwappschutzwand, einem Ventil, einer Belüftungs- oder Flüssigkeitsleitung, einem Temperatursensor, einem Füllstandsensor, einem Drucksensor oder einem Qualitätssensor besteht.

10. Verstärkung (1) für einen Kunststofftank für Kraftfahrzeuge nach einem der vorhergehenden Ansprüche, derart, dass sie eine verformbare Verbindung (11) aufweist, die die Verstärkung (1) und das mindestens eine Mittel (10) zur Befestigung des inneren Verstärkungselements (2) verbindet, wobei die Verbindung (11) so ausgestaltet ist, dass sie sich verformt, um eine relative Bewegung der Verstärkung (1) und des mindestens einen Mittels (10) zur Befestigung des inneren Verstärkungselements (2) relativ zueinander unter der Wirkung einer mechanischen Beanspruchung außerhalb der Verstärkung (1) zuzulassen.

11. Verstärkung (1) für einen Kunststofftank für Kraftfahrzeuge nach einem der vorhergehenden Ansprüche, derart, dass sie ein Aufnahmeelement (12) aufweist, das so ausgestaltet ist, dass es ein Einführmittel wie beispielsweise einen Einführstab aufnimmt.

12. Verstärkung (1) für einen Kunststofftank für Kraftfahrzeuge nach einem der vorhergehenden Ansprüche, derart, dass sie eine Vielzahl von Durchgangslöchern (13) aufweist.

13. Anordnung (4) für einen Kunststofftank für Kraftfahrzeuge, aufweisend eine Verstärkung (1) für den Tank eines Kraftfahrzeugs nach einem der Ansprüche 1 bis 12 und ein inneres Verstärkungselement (2), das so ausgebildet ist, dass es auf die Verstärkung (1) einrastet.

14. Anordnung (4) für einen Kunststofftank für Kraftfahrzeuge nach Anspruch 13, wobei das Verstärkungselement aus einer Säule (21) und einem Rückhalteelement (20) ausgewählt ist.

15. Anordnung (4) für einen Kunststofftank für Kraftfahrzeuge nach Anspruch 14, wobei das Rückhalteelement (20) eine Wand (201) aufweist, die mit einer zentralen Aussparung (200) versehen ist, wobei ein Teil der Wand (201) Verstärkungsrippen 2010) aufweist.

16. Kunststofftank für Kraftfahrzeuge, der eine Anordnung (5) für einen Kunststofftank für Kraftfahrzeuge nach einem der Ansprüche 13 bis 15 aufweist.

17. Verfahren zur Herstellung eines Kunststofftanks für Kraftfahrzeuge, das einen Schritt des Einrastens eines inneren Verstärkungselements (2) an einer Verstärkung (1) für einen Kunststofftank für Kraftfahrzeuge nach einem der Ansprüche 1 bis 12 aufweist.

## Claims

1. A frame (1) for a plastic tank for a motor vehicle, comprising at least one means (10) for attaching an internal reinforcing element (2) of the tank which is intended to connect two opposite walls of said tank, **characterized in that** the at least one means (10) for attaching the internal reinforcing element (2) comprises at least one first structure (100) configured to snap-fit at least a portion of the internal reinforcing element (2), said at least one first structure (100) comprising:
- at least two bodies (1000) that are movable relative to each other, each movable body (1000) being provided with a holding means (10001) configured to hold the internal reinforcing element (2) in a direction opposite to the snap-fitting direction, and
**characterized in that** the first structure (100) comprises
- at least one stop element (1001), separate from the movable bodies (1000), protruding in a direction opposite to the snap-fitting direction in order to provide a stop for the internal reinforcing element (2) when said element is snap-fit into place.

2. The frame (1) for a plastic tank for a motor vehicle as claimed in claim 1, such that the at least one stop element (1001) combined with the holding means (10001) form a clamp so that after snap-fitting, the at least a portion of the internal reinforcing element (2) is held in position and clamped by the combination of the hold provided by the holding means (10001) and the at least one stop element (1001).

3. The frame (1) for a plastic tank for a motor vehicle as claimed in either one of claims 1 or 2, such that said at least one first structure (100) is configured to snap-fit at least an internal portion of the internal reinforcing element (2).

4. The frame (1) for a plastic tank for a motor vehicle as claimed in any one of the preceding claims, such that said at least one first structure (100) is configured to snap-fit at least an external portion of the internal reinforcing element (2).

5. The frame (1) for a plastic tank for a motor vehicle as claimed in any one of the preceding claims, such that the at least two bodies (1000) that are movable relative to each other are tabs (10000).

6. The frame (1) for a plastic tank for a motor vehicle as claimed in any one of the preceding claims, such that the holding means (10001) configured to hold the internal reinforcing element (2) takes the form of a recess or a protrusion.

7. The frame (1) for a plastic tank for a motor vehicle as claimed in any one of the preceding claims, such that the at least one stop element (1001) comprises a rod.

8. The frame (1) for a plastic tank for a motor vehicle as claimed in any one of the preceding claims, such that the frame comprises support means (3) for supporting components of the fuel tank such as a ventilation or liquid line, a valve, a temperature sensor, a level sensor, a pressure sensor or a quality sensor.

9. The frame (1) for a plastic tank for a motor vehicle as claimed in any one of the preceding claims, such that the frame comprises at least one component selected from among a noise-reducing baffle or slosh baffle, a valve, a ventilation or liquid line, a temperature sensor, a level sensor, a pressure sensor or a quality sensor.

10. The frame (1) for a plastic tank for a motor vehicle as claimed in any one of the preceding claims, such that it comprises a deformable connection (11) connecting the frame (1) and the at least one means (10) for attaching the internal reinforcing element (2), said connection (11) being designed to deform in order to allow a relative movement of the frame (1) and of the at least one means (10) for attaching the internal reinforcing element (2) with respect to one another when subjected to a mechanical load external to the frame (1).

11. The frame (1) for a plastic tank for a motor vehicle as claimed in any one of the preceding claims, such that the frame comprises an accommodating member (12) configured to accommodate an insertion means such as an insertion rod for example.

12. The frame (1) for a plastic tank for a motor vehicle as claimed in any one of the preceding claims, such that the frame comprises a plurality of through-holes (13).

13. An assembly (4) for a plastic tank for a motor vehicle comprising a frame (1) for a motor vehicle tank as claimed in any one of claims 1 to 12 and an internal reinforcing element (2) configured to be snap-fit onto the frame (1).

14. The assembly (4) for a plastic tank for a motor vehicle as claimed in claim 13, such that the reinforcing element is selected from among a pillar (21) and a holding member (20).

15. The assembly (4) for a plastic tank for a motor vehicle as claimed in claim 14, such that the holding member (20) comprises a wall (201) provided with a central recess (200), a portion of the wall (201) comprising reinforcing ribs 2010).

16. A plastic tank for a motor vehicle comprising an assembly (5) for a plastic tank for a motor vehicle as claimed in any one of claims 13 to 15.

17. A method for manufacturing a plastic tank for a motor vehicle comprising a step of snap-fitting an internal reinforcing element (2) to a frame (1) for a plastic tank for a motor vehicle as claimed in any one of claims 1 to 12.
